# FASCICULE DE BREVET EUROPEEN

(11) **EP 0 330 127 B1**
(45) Date de publication et mention de la délivrance du brevet: **24.03.1993**
(21) Numéro de dépôt: 89102936.5
(22) Date de dépôt: 20.02.1989
(51) Int. Cl.: G06F 3/12, G06K 15/00

(54) **Dispositif permettant d'imprimer, au moyen d'une imprimante, des parties sélectionnées de l'écran d'un terminal personnel d'information**
Vorrichtung zum Drucken mittels eines Druckers von ausgewählten Teilen des Bildschirms eines Personalinformationsendgerätes
Device using a printer for printing selected portions of the screen of a personal information terminal

(30) Priorité: 22.02.1988 FR 8802085
(43) Date de publication de la demande: 30.08.1989
(73) Titulaire: COMPAGNIE GENERALE D'AUTOMATISME CGA-HBS, F-75008 Paris (FR)
(72) Inventeur: Simonin, Michel, F-91220 Bretigny sur Orge (FR)
(74) Mandataire: Weinmiller, Jürgen

(56) Documents cités:
- GB-A- 1 204 461
- PATENT ABSTRACTS OF JAPAN, vol. 8, no. 269 (P-319)[1706], 8 décembre 1984; & JP-A-59 135 540 (SHARP K.K.) 03-08-1984

## Description

La présente invention concerne un dispositif permettant d'imprimer, au moyen d'une imprimante, des parties sélectionnées d'un terminal personnel d'information.

Les systèmes informatiques actuellement connus sur le marché permettent, entre autres fonctions, de réaliser des recopies d'écran. Par exemple, il existe actuellement de nombreuses imprimantes de recopie d'écran associées au terminal personnel d'information commercialisé sous le nom "Minitel" par la prise péri-informatique. Dans certains cas, l'information qui intéresse l'utilisateur est contenue dans une ou quelques lignes seulement parmi un écran complet, dans certains cas, cette information ne représente qu'une portion de ligne seulement. Il est intéressant de pouvoir n'imprimer que la partie utile de l'information visualisée. Ceci est en particulier le cas lorsque l'on utilise une imprimante manuelle telle que celle décrite dans le document de brevet FR-A-2 592 337 intitulé "imprimante", parce que l' impression complète d'une page est laborieuse d'une part, et que d'autre part, il peut être utile de conserver cette information sur un support autre qu'une page isolée. C'est le cas par exemple lorsque l'on veut recopier par impression un numéro de téléphone obtenu par ledit terminal personnel d'information, sur un carnet d'adresse. Imprimer des parties sélectionnées d'un écran est déjà connu (JP-A-59 135 560; GB-A-1 204 461) et obtenu selon une méthode differente qui est décrite dans le brevet GB-A-1 204 461.

L'invention a ainsi pour objet un dispositif permettant d'imprimer, au moyen d'une imprimante, des parties sélectionnées d'un écran d'un terminal personnel d'information comprenant un module modulateur-démodulateur muni de moyens d'accès à un serveur informatique externe, un module clavier, un module coupleur péri-informatique, ledit module écran, et une unité de gestion permettant la mise en relation des divers modules, ladite imprimante étant reliée audit module coupleur péri-informatique, caractérisé en ce que ladite imprimante comprend un micro-contrôleur programmable avec mémoires, ledit micro-contrôleur étant programmé pour réaliser les fonctions suivantes :
a) initialisation de la procédure d'impression par l'envoi d'un ordre au terminal entraînant l'établissement des liaisons suivantes : module clavier vers module coupleur péri-informatique et module coupleur péri-informatique vers le module écran,
b) demande au terminal et mémorisation dans une mémoire de l'imprimante de la position courante du curseur d'écran : X_{c}, Y_{c},
c) ordre donné au terminal de retour du curseur de l'écran en position de début de page : Xₒ, Yₒ,
d) mémorisation dans l'imprimante des passages sélectionnés, repérés par l'opérateur par des déplacements successifs du curseur, commandés par des touches du clavier
e) impression des passages sélectionnés en d)
f) remise à l'état initial de l'imprimante, de la position du curseur en X_{c}, Y_{c}, remise des liaisons des modules du terminal dans l'état antérieur à l'initialisation visée en a).

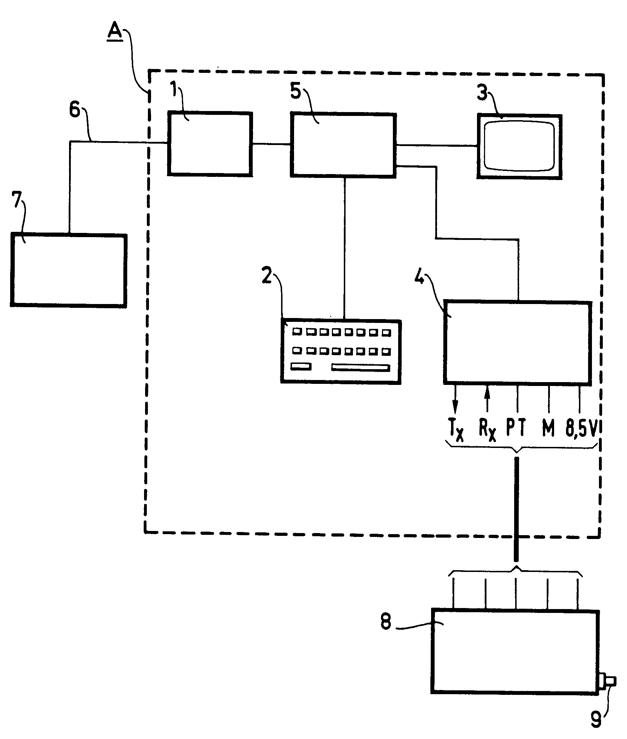

On va maintenant donner la description d'un exemple de réalisation de l'invention en se référant au dessin annexé comportant une figure unique.

Sur la figure unique représentée, on a schématisé un terminal personnel d'information A tel que celui dénommé "Minitel" et comprenant un module modulateur-démodulateur 1, un module clavier 2, un module écran 3, un module coupleur péri-informatique 4, l'ensemble étant géré par une unité de gestion 5 comprenant un microprocesseur avec mémoires et permettant de mettre en relation les différents modules selon différentes possibilités d'aiguillages. Un tel terminal est alimenté par le secteur et peut se relier, grâce au modem 1, et une ligne téléphonique 6 à un serveur informatique 7.

Le terminal A est en outre relié à une imprimante 8 par la prise du module coupleur péri-informatique 4. Cette imprimante comprend un micro-contrôleur programmable avec mémoires. La prise du module coupleur 4 comporte cinq plots :
- Tₓ : transmission de données émises par le terminal A
- Rₓ : réception de données reçues par le terminal A,
- PT : présence trafic : il s'agit d'une liaison bidirectionnelle, permettant à plusieurs modules périphériques de se connecter en bus. Si ce signal est inactif, l'imprimante 8 peut entrer en relation avec le terminal A en rendant ce signal actif. Si le signal PT est actif, l'imprimante ne peut prendre la main car cela indique qu'un autre module périphérique est en cours de fonctionnement actif. Une procédure particulière consistant en une demande de libération du signal de la ligne PT permet à l'imprimante de faire libérer le bus.
- masse électrique M
- 8,5 V : alimentation pour modules périphériques.

L'imprimante 8 possède un bouton poussoir 9 qui agit sur une entrée surveillée du micro-contrôleur de l'imprimante en changeant son niveau. Une action sur ce bouton poussoir permet d'initialiser une procédure d'impression. Cette initialisation peut également être déclenchée par l'envoi, à partir du clavier 2, d'une suite d'octets particuliers. Dans ce dernier cas, on peut utiliser une imprimante sans organe de déclenchement de processus.

On va maintenant-décrire une procédure permettant d'imprimer au moyen du dispositif ci-dessus, des parties choisies d'une page de l'écran 3 du terminal A.

A la mise sous tension du dispositif, l'unité de gestion 5 établit entre les modules 1 à 4 les relations suivantes :
Modem 1 vers écran 3
Modem 1 vers module péri-informatique 4
Clavier 2 vers Modem 1
Module péri-informatique 4 vers Modem 1

### Initialisation de la procédure :

L'opérateur appuie sur le bouton poussoir 9 de l'imprimante :
Si le fil PT est inactif, l'imprimante prend la main en le rendant actif.
Si le fil PT est actif, l'imprimante émet une demande de libération de connexion et attend la libération de PT - on est alors ramené au cas précédent. Par l'intermédiaire des liaisons Rx et Tx, l'imprimante va engager un dialogue avec le terminal, en émettant des messages par Rx (ordres avec données éventuelles) et en recevant des messages venant du terminal sur Tx (état du terminal ou données). Nous ne détaillerons pas le contenu des messages échangés.

L'imprimante envoie au terminal un ordre de modification des aiguillages de façon à ce que ceux-ci s'établissent ainsi :
- Module clavier 2 vers module péri-informatique 4
- Module péri-informatique 4 vers écran 3.

L'imprimante 8 demande au module écran 3 la position courante du curseur d'écran, soit X_{c} et Y_{c} et la mémorise.

L'imprimante donne l'ordre au module écran 3 de positionner le curseur en Xₒ, Yₒ, c'est-à-dire en haut et à gauche de l'écran en début de page.

Eventuellement, l'imprimante donne l'ordre au module péri-informatique 4 de modifier sa vitesse de transmission.

Ce dialogue est réalisé par des échanges de quelques caractères sur les lignes Rₓ et Tₓ et ne demandent que quelques centièmes de seconde, c'est-à-dire qu'ils sont très courts par rapport au temps de réaction de l'utilisateur.

### Sélection de la (ou des) ligne(s) à imprimer :

Si l'utilisateur ne veut pas imprimer la ligne pointée par le curseur, il appuie sur une touche du clavier 2 (par exemple la touche ↓). Etant donné la configuration des aiguillages, le code correspondant est transmis à l'imprimante 8. Celle-ci envoie alors au module écran 3 l'ordre de se positionner en début de ligne suivante.

Si l'utilisateur veut imprimer la ligne pointée par le curseur, il appuie sur une autre touche (par exemple la barre d'espacement). Comme précédemment, le code correspondant est envoyé à l'imprimante 8 qui mémorise la valeur Yᵢ de positionnement vertical de la ligne. Si le module d'écran le permet, l'imprimante envoie à ce module l'ordre de marquer la ligne en surbrillance ou en mode d'affichage inverse.

Si l'utilisateur ne veut imprimer qu'une partie de la ligne, on utilisera de la même manière une touche (par exemple → ) qui produit une incrémentation de la valeur X dans la mémoire de l'imprimante. Une touche particulière (par exemple la touche D pour Début) est utilisée pour marquer le début de la portion de ligne à imprimer. L'imprimante mémorise alors le numéro de ligne (Yⱼ) la position du curseur X_{D} représentant le premier caractère à imprimer. On procède de la même façon (par exemple appui sur la touche F pour fin) pour marquer le dernier caractère à imprimer, l'imprimante enregistrant X_{F}, et commandant à l'écran de positionner le curseur au début de la ligne suivante.

La fin de la sélection des caractères à imprimer se termine par l'appui sur une touche particulière du clavier 2 (par exemple la touche ENVOI) dont le code transmis à l'imprimante 8, provoque la séquence d'impression.

A la fin de la sélection, l'imprimante a mémorisé une succession de données du type :
- Yᵢ :: numéro de ligne à imprimer
- X_{Di} et X_{Fi} :: délimitation de la portion de ligne à imprimer.

On peut envisager une solution pour mémoriser les valeurs X′_{Di} lorsque l'on veut imprimer une portion de ligne depuis le caractère début en position X_{D} sur la ligne i jusqu'à la fin de la ligne, ou X′_{Fi} lorsque l'on veut imprimer depuis le début de la ligne i jusqu'au caractère X_{F} .

Si l'écran le permet, les blocs de caractères à imprimer apparaissent à l'écran en surbrillance ou en mode inversé.

Il est également possible d'adjoindre à cette procédure des séquences permettant de modifier la sélection, avant l'action sur la touche de validation ENVOI, par exemple la possibilité de remonter le curseur par l'action sur une touche ↑ par exemple.

### Séquence d'impression

Lorsque l'imprimante reçoit le code correspondant à la touche ENVOI, elle envoie au terminal A un ordre de recopie d'écran. L'exécution se traduit par l'émission sur la ligne TX des données affichées sur l'écran du terminal A, les attributs de mise en page et de présentation étant filtrés par l'unité de gestion 5. Chaque fin de ligne est marquée par l'émission des deux codes ASCII "CR" et "LF".

Plusieurs cas sont alors possibles, selon la taille de la mémoire de l'imprimante utilisée :
1) la mémoire de l'imprimante est suffisante pour stocker l'ensemble des caractères émis : Dans ce cas, toutes les données sont transférées dans la mémoire. L'imprimante dispose d'un microprocesseur qui n'envoie à la tête d'impression que les éléments sélectionnés, grâce aux valeurs Yᵢ et X_{Di}, X_{Fi} qu'elle a mémorisé. Ce mode de transmission est indispensable si le terminal ne dispose pas de la procédure appelée Xₒₙ et X_{off} par laquelle, grâce à l'émission par l'imprimante d'un octet ASCII particulier X_{off}, le terminal arrête l'envoi des caractères et d'un autre octet ASCII particulier Xₒₙ, le terminal poursuit l'envoi des caractères.
2) Si la mémoire de l'imprimante ne peut contenir que le contenu d'une ligne, par exemple 80 caractères, alors le microprocesseur examine les caractères reçus et compte les caractères "CR, LF" qu'elle reçoit. Il compare cette valeur aux grandeurs Yᵢ mémorisées. Si celle-ci ne correspond pas à Yᵢ, la transmission continue, les nouveaux caractères remplaçant les caractères précédents dans la mémoire de l'imprimante. Lorsque la valeur du compteur est égale à Yᵢ, l'imprimante bloque l'émission en émettant sur R_{X} le caractère X_{off}. L'imprimante dispose donc maintenant dans sa mémoire de la ligne sélectionnée. Elle envoie alors vers la tête d'impression les caractères compris entre les positions X_{Di}et X_{Fi} pour qu ils soient imprimés.

Lorsque l'impression de la ligne est terminée, l'imprimante envoie le caractère Xₒₙ sur le fil R_{X}, ce qui indique au module écran qu'il doit continuer l'émission de données de recopie d'écran, là ou il s'était arrêté à la réception de X_{off}.

Enfin, si la mémoire de l'imprimante ne contient qu'un seul caractère, le processus est identique à celui décrit ci-dessus, à ceci près que l'imprimante synchronise les caractères émis au rythme de l'impression, en émettant des successions de caractères Xₒₙ , X_{off}. Ceci suppose toutefois que le temps de transmission d'un caractère soit inférieur au temps réel d'impression d'un caractère (il est aisé de ralentir la vitesse d'émission par Xₒₙ ,X_{off}, il est souvent difficile de ralentir la vitesse de l'imprimante).

La procédure de synchronisation Xₒₙ X_{off} n'est qu'un exemple de réalisation. Il existe en effet d'autres procédures de synchronisation (par exemple utilisation d'un signal de synchronisation supplémentaire) qui ne sont pas accessibles actuellement sur les terminaux personnels "Minitel".

### Remise à l'état initial :

Lorsque l'impression est terminée, l'imprimante 8 annule, le cas échéant, le marquage des zones à imprimer sur l'écran du terminal A (envoi des ordres correspondant en utilisant les paramètres Yᵢ, X_{Di} et X_{Fi}) et envoie l'ordre à l'écran de positionner le curseur à l'état initial (valeurs X_{c} et Y_{c} mémorisées en phase d'initialisation). L'imprimante remet ses mémoires à l'état initial, puis fait remonter le signal sur le fil PT. Ceci a pour effet de rendre la main (éventuellement) à d'autres périphériques et de restituer la position des aiguillages du terminal à l'état initial. On est alors revenu à l'état initial décrit précédemment.

## Revendications

1. Dispositif permettant d'imprimer, au moyen d'une imprimante (8), des parties sélectionnées d'un écran (3) d'un terminal (A) personnel d'information comprenant un module modulateur-démodulateur (1) muni de moyens d'accès à un serveur informatique externe (7), un module clavier (2), un module coupleur péri-informatique (4), ledit module écran (3) et une unité de gestion (5) permettant la mise en relation des divers modules (1 à 4), ladite imprimante (8) étant reliée audit module coupleur péri-informatique, caractérisé en ce que ladite imprimante (8) comprend un micro-contrôleur programmable avec mémoires, ledit micro-contrôleur étant programmé pour réaliser les fonctions suivantes :
a) initialisation de la procédure d'impression par l'envoi d'un ordre au terminal entraînant l'établissement des liaisons suivantes : module clavier vers module coupleur péri-informatique et module coupleur péri-informatique vers le module écran,
b) demande au terminal et mémorisation dans une mémoire de l'imprimante de la position courante du curseur d'écran : X_{c}, Y_{c},
c) ordre donné au terminal de retour du curseur de l'écran en position de début de page : Xₒ, Yₒ,
d) mémorisation dans l'imprimante des passages sélectionnés, repérés par l'opérateur par des déplacements successifs du curseur, commandés par des touches du clavier,
e) impression des passages sélectionnés en d),
f) remise à l'état initial de l'imprimante, de la position du curseur en X_{c}, Y_{c}, remise des liaisons des modules du terminal dans l'état antérieur à l'initialisation visée en a).

## Claims

1. A system for printing selected portions of the screen (3) of a personal information terminal (4) by means of a printer (8), comprising a modem module (1) provided with means for accessing an external computer server (7), a keyboard module (2), a peripheral coupler module (4), said screen module (3), and a control unit (5) for interconnecting the various modules (1 to 4), said printer (8) being connected to said peripheral coupler module, the system being characterized in that said printer (8) includes a programmable microcontroller and memory, said microcontroller being programmed to perform the following functions:
a) initializing the print procedure by sending an instruction to the terminal for setting up the following connections: keyboard module to peripheral coupler module, and peripheral coupler module to keyboard module;
b) requesting the current screen cursor position (X_{c}, Y_{c}) from the terminal and storing it in memory;
c) instructing the terminal to place the screen cursor at the home position (X_{O} Y_{O});
d) storing selected passages in the printer memory as marked by the operator by successive displacements of the cursor under control of keyboard keys;
e) printing the passages selected at step d); and
f) returning the following items to their initial conditions: the printer; the cursor position (X_{c}, Y_{c}); and the interconnection configuration between the terminal modules as it existed prior to the initialization step a).

## Patentansprüche

1. Vorrichtung, mit der mit Hilfe eines Druckers (8) ausgewählte Teile eines Bildschirms (3) eines individuellen Informationsendgeräts (A) gedruckt werden können, mit einem Modulator-Demodulatormodul (1), der Mittel zum Zugang zu einem äußeren Informatikanbieter (7) besitzt, mit einem Tastaturmodul (2), einem Peripheriekopplermodul (4), wobei der Bildschirmmodul (3) und eine Steuereinheit (5) die verschiedenen Moduleinheiten (1 bis 4) miteinander in Verbindung setzt und der Drucker (8) an den Peripheriekopplermodul angeschlossen ist, dadurch gekennzeichnet, daß der Drucker (8) eine programmierbare Mikrokontrolleinheit mit Speichern enthält, die so programmiert ist, daß folgenden Funktionen durchführbar sind:
a) Start der Druckprozedur durch Aussenden eines Befehls an das Endgerät, durch den die folgenden Verbindungen hergestellt werden: Tastaturmodul zum Peripheriekopplermodul und Peripheriekopplermodul zum Bildschirmmodul,
b) Anfrage an das Endgerät nach der laufenden Position des Bildschirmcursors: X_{c}, Y_{c} und Abspeichern in einem Drukkerspeicher.
c) Befehl an das Endgerät, den Cursor des Bildschirms in die Grundposition am Seitenanfang zu bringen: X_{O} Y_{O},
d) Speicherung der ausgewählten Passagen im Drucker, die vom Benutzer durch aufeinanderfolgende Verschiebung des Cursors mittels Betätigen der Tasten der Tastatur bezeichnet werden,
e) Druck der in d) ausgewählten Passagen,
f) Rückkehr des Druckers zum Ursprungszustand, Rückkehr der Position des Cursors zu X_{c}, X_{c}, Rückkehr der Verbindungen der Moduleinheiten des Endgeräts in den Zustand, der vor dem Start gemäß a) herrschte.
